# EUROPÄISCHE PATENTANMELDUNG

(11) **EP 1 077 566 A2**
(43) Veröffentlichungstag der Anmeldung: **21.02.2001**
(21) Anmeldenummer: 00117172.7
(22) Anmeldetag: 10.08.2000
(51) Int. Cl.: H04M 7/00, H04M 3/56

(54) **Unterbrechungsfreie Übergabe von Sprache über IP-Verbindung in IP-Basierten mobilen Netzwerken unter Verwendung von Konferenzleistungsmerkmalen von Multimedia-Sitzungssteuerprotokollen**

(30) Priorität: 19.08.1999 DE 19939367
(71) Anmelder: SIEMENS AKTIENGESELLSCHAFT, 80333 München (DE)
(72) Erfinder: Lupper, Alfred, 86482 Aystetten (DE)

(57) **Zusammenfassung**

Die Erfindung bezieht sich auf ein Verfahren zum Übergeben von mobilen Kommunikationsverbindungen zwischen zumindest einer Funk-Kommunikationseinrichtung (8) und zumindest zwei Schnittstelleneinrichtungen (IWU 1 - IWU 2) eines IP-Netzes (1).

Zur Beseitigung von Umschaltpausen beim Einrichten der Schnittstelleneinrichtungen im Fall eines Übergangs wird vorgeschlagen, Konferenzleistungsmerkmale von Multimedia-Sitzungs-Steuerprotokollen (H.323) zu verwenden und während des Übergangs im IP-Netz (1) eine Konferenzschaltung aufzubauen.

## Beschreibung

Die Erfindung betrifft ein Verfahren zur Übergabe von Sprache über IP-Verbindungen in IP-basierten mobilen Netzwerken gemäß den oberbegrifflichen Merkmalen des Patentanspruchs 1 und ein Kommunikationssystem, das dieses Verfahren umsetzt.

In Kommunikationssystemen, insbesondere z.B. verbindungsorientierten Funk-Kommunikationssystemen werden Informationen (beispielsweise Sprache, Bildinformationen oder andere Daten) mit Hilfe von elektromagnetischen Wellen über eine Funkschnittstelle zwischen sendender und empfangender Station (Basisstation bzw. Teilnehmerstation) übertragen. Das Abstrahlen der elektromagnetischen Wellen erfolgt dabei mit Trägerfrequenzen, die in dem für das jeweilige System wie GSM vorgesehenen Frequenzband liegen. Für zukünftige Mobilfunksysteme mit z.B. CDMA- oder TD/CDMA-Übertragungsverfahren (TD/CDMA: Time/Code Division Multiple Access) über die Funkschnittstelle, beispielsweise das UMTS (Universal Mobile Telecommunication System) oder andere Systeme der 3. Generation sind Frequenzen im Frequenzband von ca. 2000 MHz vorgesehen.

Weiterhin sind zur Übertragung von Informationen zwischen Datenendeinrichtungen wie Computern insbesondere paketvermittelnde Kommunikationssysteme in Form von IP-Netzen (IP: Internet-Protokoll) wie das Internet oder auch das Ethernet bekannt. Zur Steuerung und zur Übertragung von Daten über solche Netze wurden Standards eingeführt, wie z.B. die H.323-Empfehlung der International Telecommunication Union (ITU). In H.323 werden Datenendeinrichtungen, zu denen neben ortsgebundenen und mobilen Computern beispielsweise auch mobile Telephone und dergleichen zählen, Ausstattungen und Dienste beschrieben, die auch den Einsatz von netzübergreifenden Multimedia-Kommunikationen ermöglichen.

Insbesondere ermöglicht H.323 Konferenzschaltungen zwischen Datenendeinrichtungen verschiedener Kommunikationssysteme.

Zum Übergang von einem lokalen IP-Netz zu einem anderen Netz und/oder Kommunikationssystem dienen Überleiteinrichtungen bzw. Gateways, die unter anderem eine Übersetzung von Funktionen zwischen H.323-Datenendeinrichtungen und anderen ITU-angepaßten Datenendeinrichtungen umfassen.

Für den Übergang von einem IP-Netz zu Mobilfunksystemen werden Netzanpassungseinrichtungen (IWU: InterWorking Unit) verwendet, die als Schnittstelle zwischen mobilen Datenendeinrichtungen, insbesondere Telephonen, die über Basisstationen kommunizieren, und dem IP-Netz ausgebildet sind. Die Verwendung von Steuer- und Übertragungsprotokollen für Multimediasitzungen, wie H.323 oder das Session Initiation Protocol (SIP) im IP-Netz bewirken entsprechend, daß die Netzanpassungseinrichtungen sich wie Datenendeinrichtungen des IP-Netzes verhalten.

Falls eine mobile Datenendeinrichtung von dem Bereich einer Basisstation in den Bereich einer anderen Basisstation wechselt, wobei beide Basisstationen mit einer ersten Netzanpassungseinrichtung kommunizieren, erfolgt eine direkte Übergabe einer bestehenden Kommunikatonsverbindung zwischen diesen Basisstationen. Eine solche Übergabe verläuft unterbrechungsfrei und in der Regel ohne Beeinträchtigung der Verbindung zwischen den kommunizierenden Teilnehmern im mobilen Netz bzw. im IP-Netz, da die Übergabe in bekannter Weise vollständig im mobilen Netz erfolgt.

Falls eine mobile Datenendeinrichtung jedoch von dem Bereich einer Basisstation, die mit dem IP-Netz über eine erste Netzanpassungseinrichtung kommuniziert, in den Bereich einer anderen Basisstation wechselt, die mit dem IP-Netz über eine zweite Netzanpassungseinrichtung kommuniziert, muß eine Übergabe zwischen diesen Netzanpassungseinrichtungen erfolgen. Dazu wird die Verbindung zu der ersten Netzanpassungseinrichtung gelöst und eine neue Verbindung zu der zweiten Netzanpassungseinrichtung eingerichtet. Während der Übergabe muß dabei der Zustand bzw. Status der Kommunikation, z.B. einer Sprachverbindung, zur zweiten Netzanpassungseinrichtung übertragen werden. Dies macht insbesondere auch die Übertragung der Zustände der IP-Protokolle, z.B. H.323, SIP (Session Initiation Protocol) oder RTP (Real Time Protocol) RSVP (Resource Reservation Protocol), TCP (Transmission Control Protocol), deren direkte Wirkung in den Netzanpassungseinrichtungen endet, von der ersten Netzanpassungseinrichtung zur zweiten erforderlich. Dies und die neue Einrichtung der Kommunikationsverbindung in der zweiten Netzanpassungseinrichtung dauern so lange, daß eine nahtlose Übergabe ohne eine Unterbrechung bestehender Verbindungen, z.B. Gespräche zwischen Teilnehmern, nicht realisierbar ist.

Der Erfindung liegt die Aufgabe zugrunde, ein Verfahren zur zügigen Übergabe von Kommunikationsverbindungen, insbesondere Sprachverbindungen zwischen Netzanpassungseinrichtungen, von mobilen in IP-basierte Netze und ein Kommunikationssystem zur Umsetzung des Verfahrens bereitzustellen.

Diese Aufgabe wird durch das Verfahren mit den Merkmalen des Anspruchs 1 bzw. das Kommunikationssystem mit den Merkmalen des Anspruchs 9 gelöst.

Die Ausnutzung einer Konferenzverbindung ermöglicht eine im Idealfall absolut nahtlose Übergabe einer Kommunikationsverbindung zwischen zwei Netzanpassungseinrichtungen, die wie Datenendgeräte im IP-Netz wirken.

Vorteilhafte Weiterbildungen sind Gegenstand von Unteransprüchen.

Dabei können in hohem Maße Standardprotokolle verwendet werden. Die Einführung einiger weniger neuer Steuernachrichten bzw. Steuerbefehle unterstützt dabei die unterbrechungsfreie Übergabe in vorteilhafter Weise. Multimedia-Sitzungssteuerungsprotokolle wie H.323 oder SIP stellen bereits Konferenzleistungsmerkmale bereit, so daß eine einfache Umsetzung des Verfahrens und des Kommunikationssystems möglich sind.

Kommunikationsdaten für die verbindungsorientierte Kommunikationseinrichtung vom paketvermittelnden Dienst aus in der Zeit um den Wechsel der verbindungsorientierten Kommunikationseinrichtung mehreren Kommunikationseinrichungen bereitzustellen ermöglicht eine effiziente Umsetzung ohne die langfristige Blockierung von Ressourcen in Zeiten zwischen Übergängen.

Die parallele Bereitstellung von Kommunikationsdaten an zumindest zwei Netzanpassungseinrichtungen bzw. Schnittstelleneinrichtungen wird über eine Mehrpunkt-Steuereinrichtung besonders einfach steuer- und umsetzbar, da eine einfache Duplizierung der Kommunikationsdaten möglich ist.

Eine zentralisierte Bereitstellung von Kommunikationsdaten ermöglicht eine Entlastung der Schnittstellen bzw. Überleiteinrichtungen und Kommunikationseinrichtungen, da diese keine Datenduplizierung und/oder Weiterleitung vornehmen müssen. Auch müssen diese keine dafür geeigneten Netzwerkkomponenten aufweisen. Eine dezentralisierte Bereitstellung von Kommunikationsdaten verhindert hingegen die Gefahr eines Engpasses an der Mehrpunkt-Steuereinrichtung, da die Kommunikationsdaten nicht durch diese oder deren Komponenten hindurchgeleitet werden müssen.

Vorteilhafterweise können die Kommunikationsdaten von beliebigen Datenquellen stammen, die mit dem IP-Netz in Verbindung stehen. Dies sind insbesondere interne Kommunikationsdaten von internen Datenendgeräten bzw. Endpunkteinrichtungen, wie z.B. an Netzanpassungseinrichtungen angeschlossene Funk-Kommunikationseinrichtungen. Aber auch Kommunikationsdaten von externen Datenquellen, z.B. einem angeschlossenen Inter- oder Intranet, einem analogen oder digitalen Telephonnetz, einem Mobilfunknetz oder einem Ethernet sind über Überleiteinrichtungen, z.B. Gateways,) einbindbar.

Nachfolgend werden Ausführungsbeispiele anhand der Zeichnung näher erläutert. Einfache Bezugszeichen weisen dabei auf Knoten und bauliche Einrichtungen hin, Bezugszeichen im Kreis auf Verbindungen und Nachrichten. Es zeigen:
- Fig. 1: ein Kommunikationsszenario mit einem IP-Netz und einer externen Kommunikationsverbindung mit zwei FunkKommunikationsnetzen im Falle einer zentralisierten H.323-Konferenzschaltung,
- Fig. 2: ein zeitliches Ablaufschema zu einer in Fig. 1 dargestellten Kommunikationsübergabe,
- Fig. 3: ein weiteres Kommunikationsszenario mit einem IP-Netz und einer internen Kommunikationsverbindung mit drei Funk-Kommunikationsnetzen im Falle einer zentralisierten H.323-Konferenzschaltung,
- Fig. 4: ein zeitliches Ablaufschema zu einer in Fig. 3 dargestellten Kommunikationsübergabe,
- Fig. 5: ein weiteres Kommunikationsszenario mit einem IP-Netz und einer externen Kommunikationsverbindung mit zwei Funk-Kommunikationsnetzen im Falle einer dezentralisierten H.323-Konferenzschaltung,
- Fig. 6: ein zeitliches Ablaufschema zu einer in Fig. 1 dargestellten Kommunikationsübergabe,
- Fig. 7: ein weiteres Kommunikationsszenario mit einem IP-Netz und einer internen Kommunikationsverbindung mit drei Funk-Kommunikationsnetzen im Falle einer dezentralisierten H.323-Konferenzschaltung und
- Fig. 8: ein zeitliches Ablaufschema zu einer in Fig. 3 dargestellten Kommunikationsübergabe.

Die dargestellten Ausführungsbeispiele zeigen Szenarios mit einer gemischten und lediglich beispielhaften GSM/H.323-Umgebung. Zur Einrichtung und Verwaltung einer Konferenzschaltung dient eine Mehrpunkt-Steuereinrichtung, z.B. in H.323 eine MCU (Multipoint Control Unit), die die Konferenzsteuerung der Daten im H.323 unter mehreren H.323-Endpunkten übernimmt.

Die Mehrpunkt-Steuereinrichtung MCU ist im H.323 selber eine H.323-Endpunkteinrichtung in einem IP-Netz 1 wie z.B. dem Internet, die in diesem die Möglichkeit bietet, drei oder mehr Datenendeinrichtungen oder dergleichen in einer Konferenzschaltung untereinander zu verbinden. Auch ist eine anfängliche Punkt-zu-Punkt-Verbindung zwischen zwei Datenendgeräten zu einem späteren Zeitpunkt ohne Unterbrechung zu einer Mehrpunktkonferenz erweiterbar.

Die Mehrpunkt-Steuereinrichtung MCU besteht aus einer unter H.323 für alle Mehrpunktkonferenzen erforderlichen Mehrpunkt-Steuerung (MC) und optionalen Mehrpunktprozessoren (MP). Die Mehrpunkt-Steuerung ermöglicht im Fall eines Anrufs bzw. einer Verbindungsanfrage das Verhandeln mit allen Datenendeinrichtungen oder dergleichen, um gemeinsame Kommunikationseinstellungen einzurichten. Die Mehrpunktprozessoren ermöglichen das Mischen und Schalten einzelner Mediendatenströme oder andere Datenverarbeitungen unter der Steuerung der Mehrpunkt-Steuerung. Die Mehrpunktprozessoren können dabei abhängig vom unterstützten Konferenztyp einen einzelnen oder mehrere Datenströme verarbeiten. Im einfachsten Fall besteht eine Mehrpunkt-Steuereinrichtung MCU nur aus einer Mehrpunkt-Steuerung MC ohne Mehrpunktprozessoren. Die Mehrpunkt-Steuereinrichtung MCU kann eine eigenständige Einheit sein, aber auch mit anderen H.323-Einrichtungen, z.B. dem Gatekeeper 10 oder dem Gateway 2 kombiniert oder als Bestandteil dieser bereitgestellt werden.

Im Fall der Verwendung des SIP-Protokolls zur Verbindungs- und Sitzungssteuerung, das eine von einer Vielzahl von denkbaren Alternativen zu H.323 darstellt, wird die Funktion der Mehrpunkt-Steuereinrichtung MCU von einem SIP-Konferenzserver übernommen.

### 1. Übergabe externer Verbindungen mittels zentralisierter H.323-Konferenz

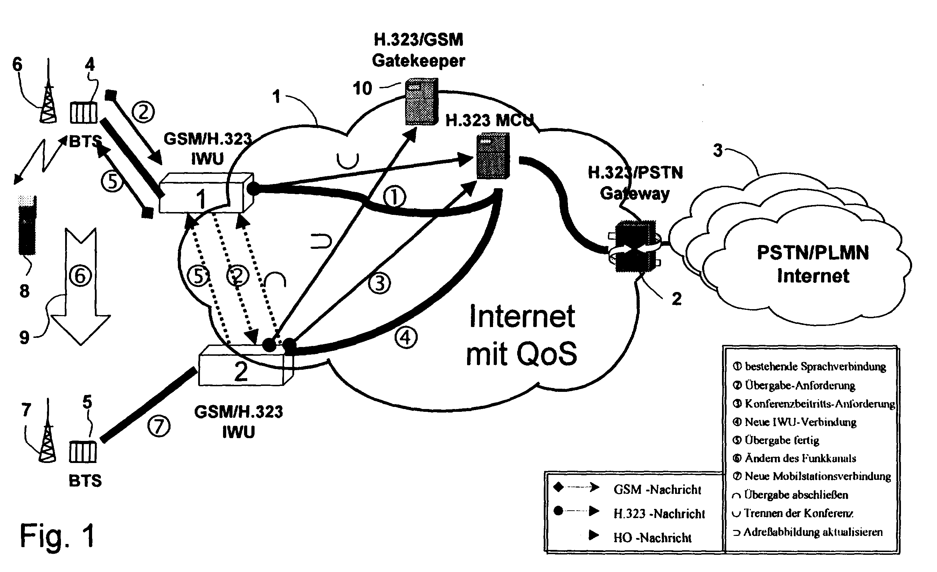

Das in Fig. 1 dargestellte Szenario zeigt ein IP-Netz 1, hier z.B. ein Internet 1 mit einer gegebenen Verbindungsgüte QoS (Quality of Service). In dem Internet 1 wird ein Steuer- und Übertragungsprotokoll für Multimedia-Sitzungen verwendet, wie z.B. H.323 oder SIP, die zwischen den einzelnen Einrichtungen einschließlich der Datenendeinrichtungen auch Konferenzschaltungen ermöglichen. Eine nachfolgend betrachtete Kommunikation besteht zwischen einem Teilnehmer an einer mobilen Station 8 und einem externen Teilnehmer im analogen oder digitalen Festnetz oder Mobilfunknetz (PSTN/PLMN oder Internet) 3.

Das Internet 1 steht über eine Überleiteinrichtung, ein Gateway 2, mit einem weiteren analogen oder digitalen Festnetz oder Mobilfunknetzwerk in Verbindung, hier einem PSTN/PLMN/Internet 3, also z.B. mit einem analogen Telephonnetz, zu dem eine hier betrachtete aktive Kommunikation besteht. Über eine erste und eine zweite Netzanpassungseinrichtung IWU 1 bzw. IWU 2 bestehen weitere Kommunikationsverbindungen zu zwei Funk-Kommunikationsnetzen 4 und 5, die hier beispielsweise gemäß dem GSM-Standard eingerichtet sind. Ein mobiles Datenendgerät oder eine mobile Station 8, wie ein mobiles Telephon, kommuniziert mit einer ersten Basisstation 6 des ersten Kommunikationsnetzes 4. Bei einem örtlichen Wechsel, der durch einen Pfeil 9 dargestellt ist, gelangt die mobile Station 8 in den Bereich einer benachbarten zweiten Basisstation 7 des zweiten Kommunikationsnetzes 5.

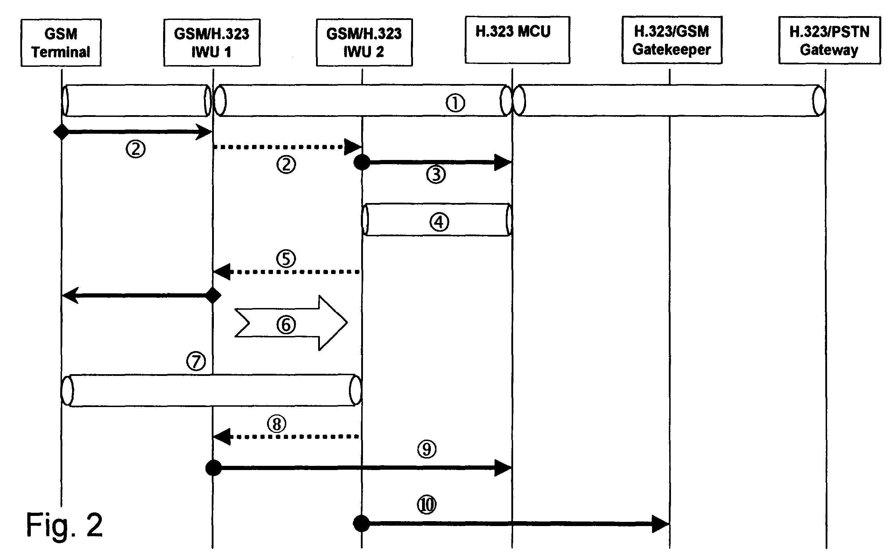

Bei abnehmender Sende- und Empfangsleistung in der Kommunikationsverbindung zur ersten Basisstation 6, wird eine Übergabe der Kommunikationsverbindung zur zweiten Basisstation 7 eingeleitet. Die zeitliche Abfolge der einzelnen Schritte ist zusätzlich in Fig. 2 skizziert, wobei Pfeilen zur räumlichen Darstellung in Fig. 1 die gleichen eingekreisten Abfolgenummern zugeordnet sind, wie Pfeilen in Fig. 2.

Wenn z.B. die mobile Station 8 oder die zugehörige Netzanpassungseinrichtung IWU 1 eine Übergabe einer Kommunikatonsverbindung an eine andere Basisstation 7 einleitet, ermittelt die erste Netzanpassungseinrichtung IWU 1, zu welcher Netzanpassungseinrichtung IWU die andere Basisstation 7 bzw. die neue Zellen-Identifikationsnummer und der neue Ortsbereich gehören. Bei einer bevorzugten Ausführungsform findet die Ermittlung nur in den Fällen statt, in denen eine interne Übergabe innerhalb des Funk-Kommunikationsnetz nicht möglich ist.

Danach stellt die erste Netzanpassungseinrichtung IWU 1 eine verbindung mit der zweiten Netzanpassungseinrichtung IWU 2 her und prüft, ob dort eine ausreichende freie Kapazität zur Übergabe der Kommunikationsverbindung mit der mobilen Station 8 besteht. Falls ja, wird im IP-Netz 1 eine Konferenzschaltung zwischen der ersten und der zweiten Netzanpassungseinrichtung IWU 1 bzw. IWU 2 und der Überleiteinrichtung Gateway 2 eingerichtet. Über eine kurze Zeitdauer werden die Kommunikationsdaten, die von dem IP-Netz 1 zur mobilen Station 8 übertragen werden, dupliziert und an sowohl die erste als auch die zweite Netzanpassungseinrichtung IWU 1 bzw. IWU 2 geliefert. Während dieser Übergabephase erhalten die erste und die zweite Netzanpassungseinrichtung IWU 1 bzw. IWU 2 somit vom Kommunikationspartner der mobilen Station 8 aus dem PSTN/PSTN/Internet-Netz 3 über das Gateway 2 und über das IP-Netz 1 die selben Daten, z.B. Gesprächsdaten.

Zur Verwaltung bzw. Aufteilung der Kommunikationsdaten dient die Mehrpunkt-Steuereinrichtung MCU. Die Aktivierung erfolgt über eine H.323-MCU-Anfrage. Die Daten werden bei der in dieser Figur dargestellten zentralisierten Lösung durch die MCU geleitet und sind so gezielt verarbeitbar und verteilbar.

Vorteilhafterweise müssen die einzelnen Datenendeinrichtungen bzw. hier Netzanpassungseinrichtungen IWU 1 und IWU 2 lediglich einfache Punkt-zu-Punkt-Verbindungen unterstützen. Die Mehrpunkt-Steuereinrichtung MCU kann dafür von sich ausgehend eine Vielzahl von Einzelverbindungen zu den kommunizierenden Einrichtungen einrichten. In den einzelnen Datenendeinrichtungen müssen daher keine speziellen Netzfähigkeiten bereitstehen.

Die zweite Netzanpassungseinrichtung IWU 2 verwirft die vom Kommunikationspartner empfangenen Daten so lange, wie die mobile Station 8 die physikalische Übergabe bzw. den Wechsel zur Basisstation 7 an der Netzanpassungseinrichtung IWU 2 noch nicht vollzogen hat. Der Datenstrom von der mobilen Station 8 wird in dieser Zeit nur zur ersten Basisstation 6 und darüber zur ersten Netzanpassungseinrichtung IWU 1 übertragen, also vorzugsweise zu einem Zeitpunkt jeweils nur zu einer Netzanpassungseinrichtung IWU.

Da die Daten an der zweiten Netzanpassungseinrichtung IWU 2 verfügbar sind, bevor die tatsächliche physikalische Übergabe der mobilen Station 8 erfolgt, kann eine Unterbrechung des Datenstroms während der Übergabe minimiert werden. Die Minimierung der Unterbrechung ist dabei von der Dauer des tatsächlichen physikalischen Wechsels der Verbindungs- bzw. Funkkanäle abhängig.

Nach der Übergabe an die zweite Netzanpassungseinrichtung IWU 2 wird die Verbindung zur ersten Netzübergabeeinrichtung IWU 1 beendet. Die Datenbank eines sogenannten Gatekeepers 10 oder eines SIP-Ortsservers wird mit der Adresse der neuen Netzanpassungseinrichtung IWU 2 aktualisiert, unter der die mobile Station 8 nunmehr vom IP-Netz 1 aus gefunden werden kann. Beim vorliegenden Ausführungsbeispiel dient der Gatekeeper 10 als H.323-typische Einrichtung u.a. auch zur Übersetzung von E.164 in H.323-Adressen und zur Zugriffssteuerung im IP-Netz 1.

### 2. Übergabe interner Verbindungen mittels zentralisierter H.323-Konferenz

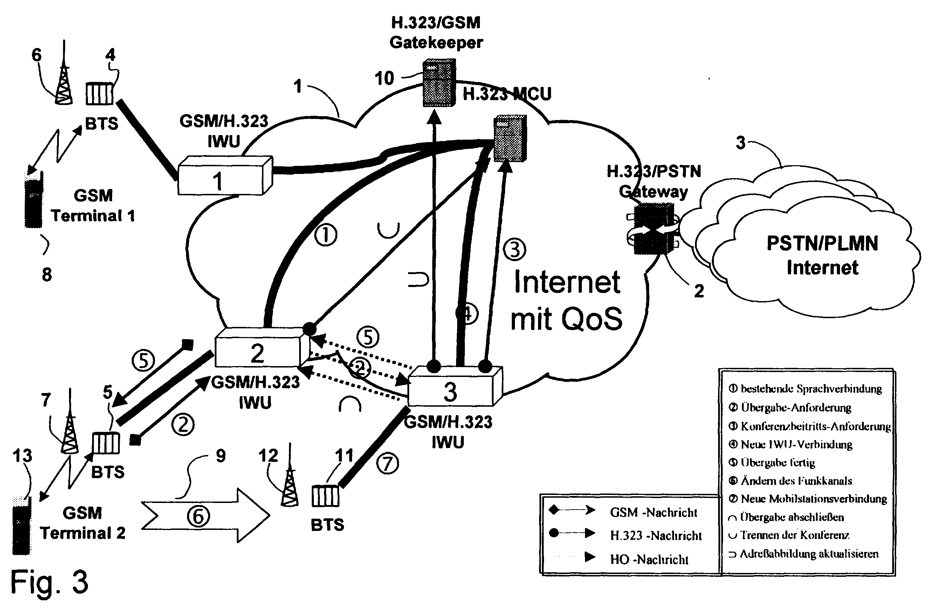

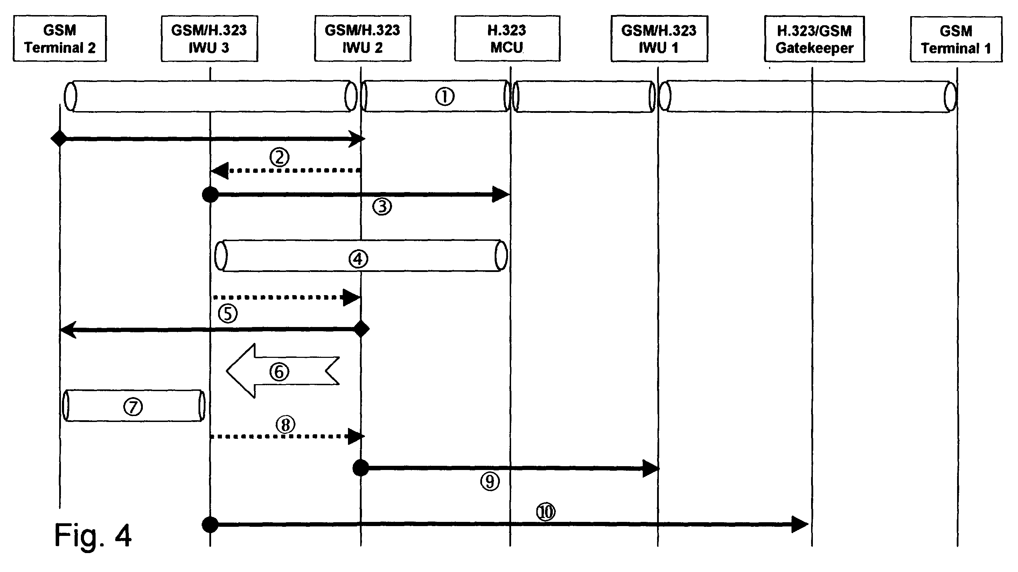

Eine weitere Ausführungsform mit zentralisierter Lösung ist in den Fig. 3 und 4 dargestellt. Nachfolgend werden insbesondere Unterschiede zu den vorstehenden Figuren erläutert.

Hier besteht eine Kommunikation zwischen zwei mobilen Teilnehmern 8 und 13, die über die erste bzw. zweite Basisstation 6 bzw. 7, die erste bzw. zweite Funk-Kommunikationseinrichtung 4 bzw. 5, die erste bzw. zweite Netzanpassungseinrichtung IWU 1 bzw. IWU 2 und das IP-Netz 1 miteinander kommunizieren. Dabei bewegt sich der zweite Teilnehmer 13 aus dem Bereich der zweiten Basisstation 7 in den Bereich einer dritten Basisstation 12, die wiederum über ein drittes Funk-Kommunikationsnetz 11 oder selber direkt mit einer dritten Netzanpassungseinrichtung IWU 3 des IP-Netzes 1 verbunden ist.

Stellt die mobile Station 13 oder die Netzanpassungseinrichtung IWU 2 fest, daß das Empfangssignal von der dritten Basisstation 12 stärker als das von der zweiten Basisstation 7 ist, so sendet sie eine entsprechende Übergabeanforderung aus. Die zweite Netzanpassungseinrichtung IWU 2 überprüft, zu welcher Basisstation 12 und Netzanpassungseinrichtung IWU 3 die zweite mobile Station 13 ihre Verbindung übertragen möchte. Ist dort genügend Kapazität frei, so wird ein Wechsel eingeleitet, der im wesentlichen wie der zuvor beschriebene abläuft. Durch das Aussenden einer H.323-Nachricht an die Mehrpunkt-Steuereinrichtung wird eine Konferenzschaltung eingerichtet, die eine Verbindung von der ersten Netzanpassungseinrichtung IWU 1 einerseits zu der zweiten und parallel dazu dritten Netzanpassungseinrichtung IWU 2 bzw. IWU 3 erstellt. Die beiden letztgenannten empfangen parallel die durch die Mehrpunkt-Steuereinrichtung MCU duplizierten Daten der ersten Netzanpassungseinrichtung IWU 1. Die dritte Netzanpassungseinrichtung IWU 3 verwirft die empfangenen Daten so lange, bis der Wechsel der physikalischen Funkkanäle der zweiten mobilen Station 13 zur Basisstation 12 hin erfolgt ist. Von da ab läßt die zweite Netzanpassungseinrichtung IWU 2 die empfangenen Daten fallen, sofern sie nicht direkt abgeschaltet wird. Die Kommunikation läuft somit nach einer entsprechenden Signalisierung zur Mehrpunkt-Steuereinrichtung MCU innerhalb des IP-Netzes 1 von der ersten Netzanpassungseinrichtung IWU 1, die Mehrpunkt-Steuereinrichtung MCU und die dritte Netzanpassungseinrichtung IWU 3. Abschließend wird der Gatekeeper hinsichtlich der neuen Adresse der Netzanpassungseinrichtung IWU 3, an der sich die zweite mobile Station 13 nun befindet, aktualisiert.

### 3. Übergabe externer Verbindungen mittels dezentralisierter H.323-Konferenz

Zur Verwaltung bzw. Aufteilung der Kommunikationsdaten dient die Mehrpunkt-Steuereinrichtung MCU, die wieder die Konferenzsteuerung der Daten unter mehreren H.323-Endpunkten übernimmt. Bei der hier dargestellten dezentralisierten Lösung muß sie die Daten dabei nicht selber empfangen und weiterleiten. Daher stellt sie weder eine eigenständige Fehlerquelle, noch einen Engpaß bei der Datenübermittlung dar.

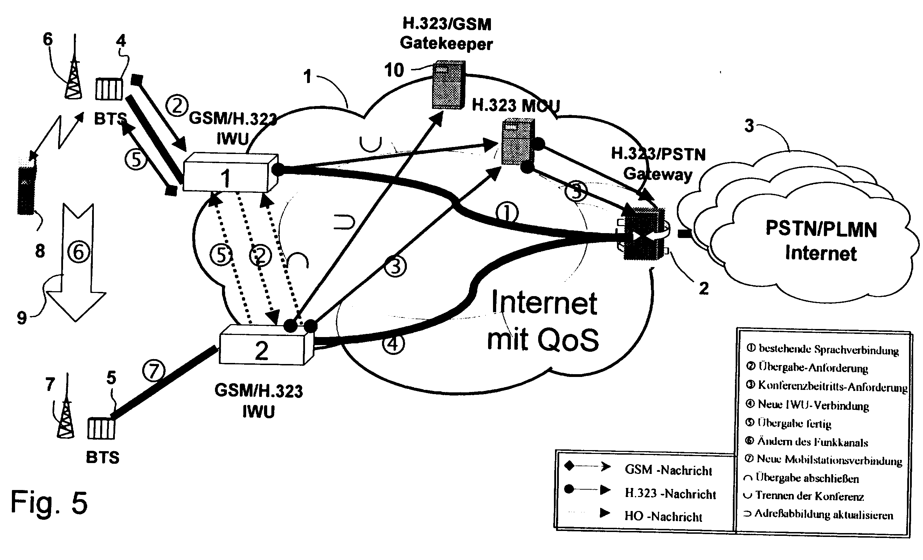

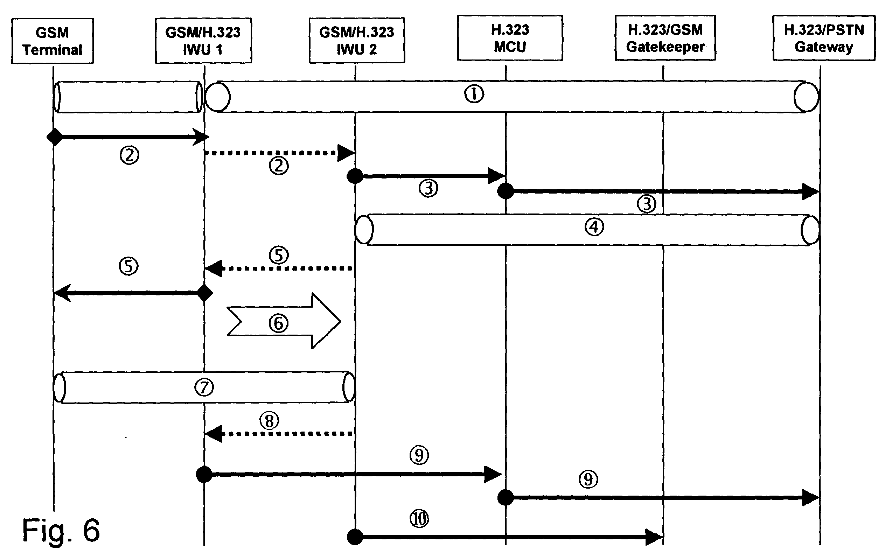

Eine weitere Ausführungsform mit dezentralisierter Lösung ist in den Fig. 5 und 6 für Verbindungen zwischen einem internen mobilen Teilnehmer und einem externen Kommunikations- bzw. Gesprächspartner von diesem dargestellt. Nachfolgend werden insbesondere Unterschiede zu den vorstehenden Figuren erläutert.

Nach der Übergabeanforderung der ersten und hier einzigen mobilen Station 8 oder der zugehörigen Netzanpassungseinrichtung IWU 1 an eine andere Basisstation überprüft diese in den zugeordneten Tabellen, zu welcher Netzanpassungseinrichtung IWU die neue Zellen-ID und der neue Ortsbereich gehören. Daraufhin wird die zweite Netzanpassungseinrichtung IWU 2 kontaktiert, um deren Netzkapazität zu prüfen. Hat sie freie Kapazitäten, so wird insbesondere von der zweiten Netzanpassungseinrichtung IWU 2 aus bei der Mehrpunkt-Steuereinrichtung MCU eine Konferenzschaltung mit den beiden Netzanpassungseinrichtungen IWU 1 und 2 und der Überleiteinrichtung Gateway 2 angefordert. Entsprechend werden die von der externen Datenquelle über das Gateway 2 gesendeten Daten für eine kurze Zeit dupliziert und an sowohl die erste als auch die zweite Netzanpassungseinrichtung IWU 1 und IWU 2 übermittelt. In dieser Zeit verwirft die zweite Netzanpassungseinrichtung IWU 2 die von der externen Datenquelle empfangenen Daten, bis der physikalische Wechsel der mobilen Station 8 zu ihr hin vollzogen ist. Nach der Informierung der ersten Netzanpassungseinrichtung IWU 1 und der mobilen Station 8, daß die zweite Netzanpassungseinrichtung IWU 2 zur Übernahme des Gesprächs bereit ist, findet die eigentliche Übergabe der physikalischen Funkkanäle statt. Nach der Übergabe zur zweiten Netzanpassungseinrichtung IWU 2 signalisiert diese der Mehrpunkt-Steuereinrichtung MCU die erfolgreiche Übergabe mittels einer Nachricht, woraufhin die Konferenzschaltung zur Netzanpassungseinrichtung IWU 1 beendet wird und die Mehrpunkt-Steuereinrichtung MCU die Daten von der externen Datenquelle direkt zur zweiten Netzanpassungseinrichtung IWU 2 weiterleiten läßt.

### 4. Übergabe interner Verbindungen mittels dezentralisierter H.323-Konferenz

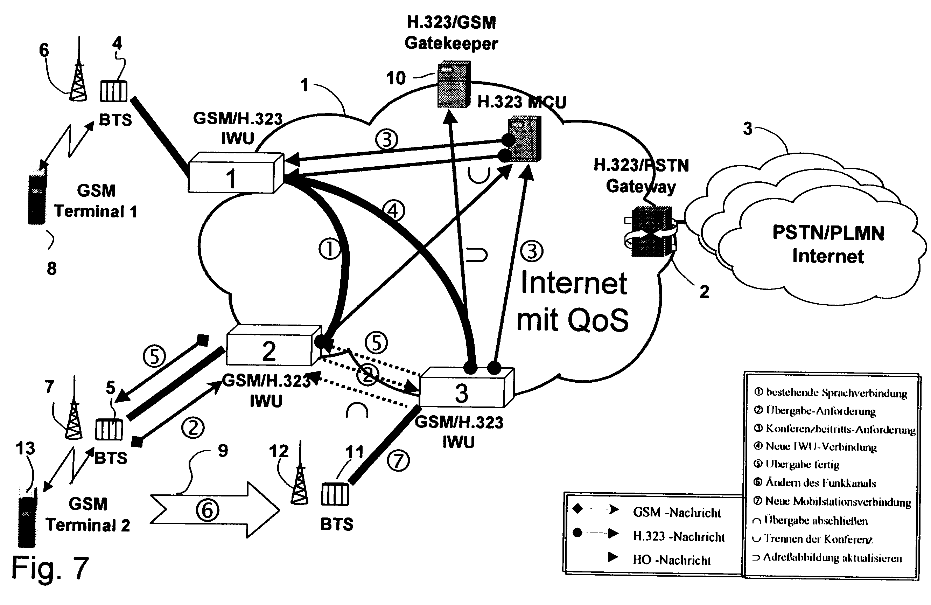

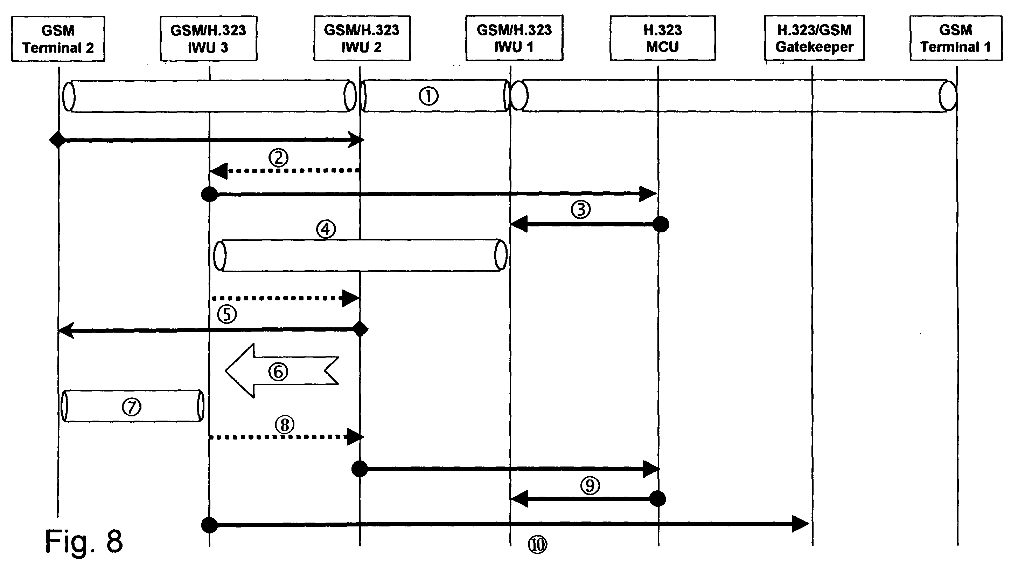

Eine weitere Ausführungsform mit dezentralisierter Lösung ist in den Fig. 7 und 8 für interne Verbindungen zwischen zwei mobilen Stationen 8 und 13 dargestellt, die über eine erste Netzanpassungseinrichtung IWU 1 bzw. eine zweite Netzanpassungseinrichtung IWU 2 direkt ans IP-Netz 1 angeschlossen sind. Nachfolgend werden dabei insbesondere Unterschiede zu den vorstehenden Figuren erläutert.

Nach der Übergabeanforderung der zweiten mobilen Station 13 oder der zugehörigen zweiten Netzanpassungseinrichtung IWU 2 an eine andere Basisstation überprüft diese in den zugeordneten Tabellen, zu welcher Netzanpassungseinrichtung IWU die neue Zellen-ID und der neue Ortsbereich gehören. Daraufhin wird die dritte Netzanpassungseinrichtung IWU 3 kontaktiert, um deren Netzkapazität zu prüfen. Hat sie freie Kapazitäten, so wird insbesondere von der dritten Netzanpassungseinrichtung IWU 3 aus bei der Mehrpunkt-Steuereinrichtung MCU eine Konferenzschaltung mit den drei Netzanpassungseinrichtungen IWU 1 bis 3 angefordert. Entsprechend werden die von der ersten mobilen Station 8 gesendeten Daten für eine kurze Zeit dupliziert und an sowohl die zweite als auch die dritte Netzanpassungseinrichtung IWU 2 und IWU 3 übermittelt. In dieser Zeit verwirft die dritte Netzanpassungseinrichtung IWU 3 die von der ersten Netzanpassungseinrichtung IWU 1 empfangenen Daten, bis der Wechsel der physikalischen Funkkanäle der zweiten mobilen Station 13 zu ihr hin vollzogen ist. Nach der Informierung der zweiten Netzanpassungseinrichtung IWU 2 und der zweiten mobilen Station 13, daß die dritte Netzanpassungseinrichtung IWU 3 zur Übernahme des Gesprächs bereit ist, findet die eigentliche Übergabe der physikalischen Funkkanäle statt. Nach der Übergabe zur dritten Netzanpassungseinrichtung IWU 3 signalisiert diese der Mehrpunkt-Steuereinrichtung MCU die erfolgreiche Übergabe mittels einer Nachricht, woraufhin die Konferenzschaltung beendet wird und die Mehrpunkt-Steuereinrichtung MCU die Daten von der ersten Netzanpassungseinrichtung IWU 1 direkt zur dritten Netzanpassungseinrichtung IWU 3 weiterleiten läßt.

### 5. Variationen zu den vorstehenden Ausführungsformen

Die vorstehend beschriebenen Funk-Kommunikationssysteme sind nicht auf den GSM-Standard beschränkt. Beliebige andere Standards sind einsetzbar, z.B. UMTS für die dritte Mobilfunkgeneration, DECT für schnurlose Telephone im häuslichen Bereich, CDMA (IS-95), D-AMPS (IS-136), WB-CDMA oder PDC. Derartige Systeme können auch im Bereich der Macrodiversität eingesetzt werden. Im diesem Fall, in dem mehr als zwei Netzanpassungseinrichtungen gleichzeitig in die direkte Versorgung von Mobilstationen eingebunden sind, ist im Fall einer H.323-Mehrpunktkonferenz eine hochwertige Synchronisierung der Kommunikationsdaten zu empfehlen. Die Netzanpassungseinrichtungen IWU 1 - IWU 3 bleiben dann so lange aktiv, wie die mobilen Stationen eine Funkverbindungen zu diesen halten.

Auch können anstelle von Telephonen andere derzeitige oder zukünftige Kommunikationseinrichtungen und/oder Datenendeinrichtungen kommunizieren, insbesondere tragbare Computer und Kombinationsgeräte mit Telephon-, Fax-, eMail- und/oder Internetfunktion. Dazu können dann anstelle einfacher Sprachverbindungen auch Datenverbindungen bzw. Multimediaverbindungen eingerichtet werden, dies insbesondere wenn IP-basierte Protokolle (protocol stacks) in den Netzanpassungseinrichtungen enden.

Die verbindungsorientierten Kommunikationseinrichtungen müssen auch nicht zwingend Funk-Kommunikationseinrichtungen sein, sondern können auch verbindungsorientierte Kommunikationseinrichtungen verschiedener Kommunikationssysteme sein, die ans IP-Netz 1 angeschlossen sind.

In Rev. 2.0 des H.323-Standards ist ein Mechanismus zum "schnellen Verbinden" für das Einrichten von Verbindungen spezifiziert, bei dem die VoIP-Trägereinrichtungs-Signalisierungsinformation in H.225 CC-Nachrichten eingebettet ist. D.h. die H.245-Prozeduren müssen nicht explizit als ein Teil eines Anrufeinrichtens bzw. -beendens ausgeführt werden. Dies ermöglicht ein deutlich schnelleres Einrichten von Verbindungen. Die Endpunkt-zu-Endpunkt-Verhandlungen sollten vorzugsweise auf einer Ruf-für-Ruf-Basis verwendet werden, um zu bestimmen, ob die Option "schnelle Verbindung" möglich ist. Falls dies bei beiden Endpunkten möglich ist, sollte diese Option bevorzugt werden. Andernfalls würde zu den H.245-Prozeduren umgeschaltet.

## Patentansprüche

1. Verfahren zum Übergeben von mobilen Kommunikationsverbindungen zwischen zumindest einer verbindungsorientierten Kommunikationseinrichtung, insbesondere Funk-Kommunikationseinrichtung (8; 13), mit kontinuierlicher Übertragung und zumindest zwei Schnittstelleneinrichtungen (IWU 1 - IWU 3) eines paketvermittelnden Dienstes, insbesondere eines IP-Netzes (1),
dadurch gekennzeichnet,
daß Konferenzmerkmale von insbesondere zumindest einem Steuerprotokoll (H.323; SIP) verwendet werden.

2. Verfahren nach Anspruch 1, bei dem
das Steuerprotokoll (H.323; SIP) Multimedia-Sitzungs-Steuerprotokolle mit Konferenzmerkmalen bereitstellt.

3. Verfahren nach Anspruch 1 oder 2, bei dem
in der Zeit um den Wechsel der verbindungsorientierten Kommunikationseinrichtung (8; 13) zwischen den Bereichen der zumindest zwei Schnittstelleneinrichtungen (2, IWU 1 - IWU 2; IWU 1 - IWU 3) Kommunikationsdaten für die verbindungsorientierte Kommunikationseinrichtung (8; 13) vom paketvermittelnden Dienst aus parallel über die zumindest zwei Schnittstelleneinrichtungen (IWU 1, IWU 2; IWU 2, IWU 3) bereitgestellt werden.

4. Verfahren nach Anspruch 3, bei dem
eine zentralisierte Mehrpunkt-Steuereinrichtung (MCU) Kommunikationsdaten für die zumindest eine verbindungsorientierte Kommunikationseinrichtung (8; 13) durch sich hindurch zu einer oder im Fall einer durchzuführenden Übergabe dupliziert zu mehreren der zumindest zwei Schnittstelleneinrichtungen (IWU 1 - IWU 3) leitet.

5. Verfahren nach Anspruch 3, bei dem
eine dezentralisierte Mehrpunkt-Steuereinrichtung (MCU) Kommunikationsdaten für die zumindest eine verbindungsorientierte Kommunikationseinrichtung (8; 13) an sich vorbei zu einer oder im Fall einer durchzuführenden Übergabe dupliziert zu mehreren der zumindest zwei Schnittstelleneinrichtungen (IWU 1 - IWU 3) leitet.

6. Verfahren nach einem vorhergehenden Anspruch, bei dem
als Schnittstelleneinrichtungen für interne und/oder externe Kommunikationsverbindungen Netzanpassungseinrichtungen (IWU 1 - IWU 3), Gateways (2) und/oder dergleichen miteinander verbunden werden.

7. Verfahren nach einem vorhergehenden Anspruch, bei dem
die Kommunikationsverbindungen zwischen der zumindest einen verbindungsorientierten Kommunikationseinrichtung (8) und einer weiteren verbindungsorientierten Kommunikationseinrichtung (13) an einer Netzanpassungseinrichtung (IWU 2) oder einer externen Kommunikationseinrichtung jenseits eines Gateways (2) bestehen.

8. Verfahren nach einem vorhergehenden Anspruch, bei dem
über die Kommunikationsverbindung Sprachdaten und/oder Informationsdaten von Telephonen, anderen Kommunikationseinrichtungen und/oder Datenendeinrichtungen übertragen werden, insbesondere Daten von tragbaren Computern und Kombinationsgeräten mit Telephon-, Fax-, eMail- und/oder Internetfunktion.

9. Kommunikationssystem zum Übergeben von mobilen Verbindungen, nach insbesondere einem Verfahren nach einem der vorhergehenden Ansprüche, mit
- zumindest einer verbindungsorientierten Kommunikationseinrichtung, insbesondere Funk-Kommunikationseinrichtung (8; 13), und
- zumindest zwei Schnittstelleneinrichtungen (IWU 1 - IWU 3) eines paketvermittelnden Dienstes, insbesondere eines IP-Netzes (1), und
- eine Steuer- und/oder Verbindungseinrichtung zum Koppeln einer der zwei Schnittstelleneinrichtungen (IWU 1 - IWU 3) mit einer Datenquelle (2; IWU 1), die Kommunikationsdaten für die verbindungsorientierte Kommunikationseinrichtung liefert,
dadurch gekennzeichnet,
daß die Steuer- und/oder Verbindungseinrichtung eine Mehrpunkt-Steuereinrichtung (MCU) zum zeitweiligen Zuführen der Kommunikationsdaten zu zumindest zwei der Schnittstelleneinrichtungen (IWU 1 - IWU 3) ist.

10. Kommunikationssystem nach Anspruch 9, bei dem
die Mehrpunkt-Steuereinrichtung (MCU) zum zentralisierten und/oder dezentralisierten Zuführen der Kommunikationsdaten zu zumindest zwei der Schnittstelleneinrichtungen (IWU 1 - IWU 3) ausgelegt ist.

11. Kommunikationssystem nach Anspruch 9 oder 10, bei dem
die Mehrpunkt-Steuereinrichtung (MCU) zum Zuführen der Kommunikationsdaten zu zumindest zwei der Schnittstelleneinrichtungen (IWU 1 - IWU 3) eine Konferenzschaltung einrichtet, insbesondere zum Duplizieren von Kommunikationsdaten ausgelegt ist.
